# DEMANDE DE BREVET EUROPEEN

(11) **EP 3 813 165 A1**
(43) Date de publication de la demande: **28.04.2021**
(21) Numéro de dépôt: 20202199.4
(22) Date de dépôt: 16.10.2020
(51) Int. Cl.: H01M 4/64, H01M 4/96, H01M 4/86

(54) **ÉLECTRODE ÉLECTROCHIMIQUE**

(30) Priorité: 22.10.2019 FR 1911787
(71) Demandeur: Commissariat à l'énergie atomique et aux énergies alternatives, 75015 Paris (FR)
(72) Inventeur: HUGO, Adrien, 38054 GRENOBLE CEDEX 09 (FR); ALAVA, Thomas, 38054 GRENOBLE CEDEX 09 (FR); MAILLEY, Pascal, 38054 GRENOBLE CEDEX 09 (FR)
(74) Mandataire: Brevalex

(57) **Abrégé**

L'invention concerne une électrode électrochimique (100) qui comprend :
- un empilement (200) délimité par deux faces principales (201, 202) et un contour (203) reliant lesdites faces, l'empilement comprenant, entre ses faces principales, une alternance de feuillets de graphène (300) et de couches diélectriques (400) et de sorte que chaque feuillet de graphène soit intercalé entre deux couches diélectriques, le bord des feuillets de graphène étant en partie exposé à l'environnement extérieur au niveau d'une section, dite section active (204), du contour, ladite section active (204) formant une zone électro-chimiquement sensible de l'électrode électrochimique,
- une ou plusieurs électrodes, dites électrodes de contact (500), contactant électriquement les feuillets de graphène (300), et destinées à collecter un signal électrique résultant d'une réaction électrochimique susceptible de se produire au niveau de la section active (204).

## Description

### DOMAINE TECHNIQUE

La présente invention se rapporte au domaine de l'électrochimie, et notamment celui des électrodes électrochimiques.

La présente invention propose, en particulier, une électrode électrochimique pourvue de feuillets de graphène et d'une sensibilité améliorée au regard des électrodes électrochimiques connues de l'état de la technique.

### ÉTAT DE LA TECHNIQUE ANTÉRIEURE

Isolé pour la première fois en 2004, le graphène suscite depuis un intérêt grandissant. En effet, sa structure bidimensionnelle, obtenue par un agencement selon un réseau hexagonal d'atomes de carbone, confère au graphène des propriétés remarquables.

Le graphène présente, en particulier, une conductivité électrique et une résistance mécaniques très élevées. Il est par ailleurs optiquement transparent, présente une excellente conductivité thermique et est biocompatible.

Ces propriétés uniques permettent notamment de répondre à des exigences en termes de sensibilité électrique, de réduction de taille, de stabilité de rapport signal sur bruit relatives au développement d'une nouvelle génération de capteurs.

Parmi ces derniers, les capteurs électrochimiques font l'objet d'une attention et d'efforts constants afin d'améliorer leur sensibilité tout en réduisant leur taille.

Cependant, lorsqu'il ne présente que peu à pas de défauts, le graphène souffre d'une inertie chimique dans son plan de sorte que sa mise en œuvre comme matériau électro chimiquement sensible dans une Électrode électrochimique reste problématique.

Une distinction entre le plan et le bord d'un feuillet de graphène permet toutefois de tempérer ce constat.

En effet, dans l'étude [1] citée à la fin de description, une différence de réactivité électrochimique a pu être observée entre les bords et le plan d'un feuillet de graphène. Notamment, les auteurs de cette étude ont pu constater une réactivité électrochimique du bord d'un feuillet de graphène bien supérieure à celle de son plan, et en particulier comparable à celle d'une électrode électrochimique de carbone vitreux. Cette différence de comportement est essentiellement due à la présence de groupes oxygène, au niveau dudit bord, qui augmentent localement la densité électronique, et autorisent ainsi un transfert électronique plus rapide lorsque des espèces interagissent de manière électrochimique avec ledit bord.

Par ailleurs, les bords se comportent comme des micro-électrodes électrochimiques vers lesquelles les réactifs diffusent de manière convergente. Ce phénomène de diffusion convergente, plus rapide qu'un phénomène de diffusion planaire susceptible d'être observé au niveau du plan d'un feuillet de graphène, rend également le bord plus sensible à la présence desdits réactifs.

En parallèle à cette étude, et afin d'améliorer la réactivité du graphène dans le plan, il a été proposé de transformer ce dernier en oxyde de graphène réduit ou en oxyde de graphène.

Cependant, cette transformation implique des processus chimiques agressifs et complexes à mettre en œuvre, et qui affectent d'autant tant l'intégrité électrique que l'intégrité mécanique du feuillet concerné.

Par ailleurs, les performances des électrodes électrochimiques faites d'oxyde de graphène réduit et/ou d'oxyde de graphène sont limitées par un rapport signal sur bruit peu favorable. Cet effet a notamment pour origine la présence des défauts et groupes oxygène dans le plan qui altèrent la conductivité des feuillets.

En outre, la formation de l'oxyde de graphène réduit et de l'oxyde de graphène reste complexe et présente un coût qui n'est pas toujours compatible avec les applications visées.

Un but de la présente invention est donc de proposer une électrode électrochimique qui comprend des feuillets de graphène et dont les performances sont améliorées au regard des électrodes électrochimiques connues de l'état de la technique.

Un autre but de la présente invention est également de proposer une électrode électrochimique qui comprend des feuillets de graphène et qui présente une sensibilité améliorée au regard des électrodes électrochimiques connues de l'état de la technique.

### EXPOSÉ DE L'INVENTION

Les buts de la présente invention sont, au moins en partie, atteints par une électrode électrochimique qui comprend :
- un empilement délimité par deux faces principales et un contour reliant lesdites faces, l'empilement comprenant, entre ses faces principales, une alternance de feuillets de graphène et de couches diélectriques et de sorte que chaque feuillet de graphène soit intercalé entre deux couches diélectriques, le bord des feuillets de graphène étant en partie exposé à l'environnement extérieur au niveau d'une section, dite section active, du contour, ladite section active formant une zone électrochimiquement sensible de l'électrode électrochimique,
- une ou plusieurs électrodes, dites électrodes de contact, contactant électriquement les feuillets de graphène, et destinées à collecter un signal électrique résultant d'une réaction électrochimique susceptible de se produire au niveau de la section active.

Selon un mode de réalisation, les couches diélectriques présentent une épaisseur au moins trois fois supérieure à celle des feuillets de graphène.

Selon un mode de réalisation, l'une ou plusieurs électrodes de contact sont au contact des feuillets de graphène au niveau d'une section du contour, dite section de contact.

Selon un mode de réalisation, l'empilement comprend une ou plusieurs ouvertures débouchant au niveau d'au moins une des faces principales, et dans lesquelles l'une ou plusieurs électrodes de contact viennent contacter les feuillets de graphène.

Selon un mode de réalisation, l'une ou plusieurs électrodes de contact comprend une unique électrode de contact contactant l'ensemble de feuillets de graphène.

Selon un mode de réalisation, le bord des feuillets de graphène en partie exposé à l'environnement extérieur au niveau de la section active est hydrogéné ou oxydé.

Selon un mode de réalisation, chaque feuillet de graphène comprend une pluralité de monocouches de graphène entre lesquelles des ions Li ou Na sont insérés au niveau du bord exposé à l'environnement extérieur.

Selon un mode de réalisation, les bords des feuillets de graphène exposés à l'environnement extérieur sont en affleurement avec le contour au niveau de la section active.

Selon un mode de réalisation, les feuillets de graphène sont en projection par rapport au contour au niveau de la section active de manière à exposer à l'environnement extérieur une section des faces des feuillets, dite section exposée, qui s'étend à partir de leur bord selon une distance prédéterminée, avantageusement la distance prédéterminée est comprise entre 1 nm et 100nm.

Selon un mode de réalisation, la section exposée est fonctionnalisée par des espèces chimiques et/ou biologiques.

Selon un mode de réalisation, l'empilement repose, par une de ces faces principales, sur un support sur lequel des espèces biologiques sont susceptible de se greffer et interagir avec les bords des feuillets de graphène au niveau de la section active.

Selon un mode de réalisation, les couches diélectriques comprennent au moins un des matériaux choisi parmi : SiO₂, HfO₂, Al₂O₃, Si₃N₄.

Selon un mode de réalisation, les couches diélectriques comprennent au moins un des matériaux choisi parmi : Polyméthacrylate de méthyle, Polyéthylène, Polypropylène, Polychlorure de vinyle.

### BRÈVE DESCRIPTION DES DESSINS

D'autres caractéristiques et avantages apparaîtront dans la description qui va suivre d'une électrode électrochimique selon l'invention, donnés à titre d'exemples non limitatifs, en référence aux dessins annexés dans lesquels :
La figure 1 est une représentation schématique d'une électrode électrochimique selon une première variante d'un premier mode de réalisation de la présente invention, en particulier l'électrode électrochimique est représentée selon un plan de coupe perpendiculaire aux faces principales de ladite électrode ;
La figure 2 est une représentation schématique d'une électrode électrochimique selon une deuxième variante d'un premier mode de réalisation de la présente invention, en particulier l'électrode électrochimique est représentée selon un plan de coupe perpendiculaire aux faces principales de ladite électrode ;
La figure 3 est une représentation selon une face principale et en transparence d'un exemple de disposition d'une bande de contact ;
La figure 4 est une représentation schématique d'une électrode électrochimique selon la première variante d'un premier mode de réalisation de la présente invention et reposant sur un support sur lequel des espèces biologiques « C » sont susceptibles de se greffer et interagir avec les bords des feuillets de graphène au niveau de la section active ;
La figure 5 est une représentation schématique d'une électrode électrochimique selon un deuxième mode de réalisation de la présente invention, en particulier l'électrode électrochimique est représentée selon un plan de coupe perpendiculaire aux faces principales de ladite électrode ;
Les figures 6a, 6b, 6c, 6d et 6e sont des représentations schématiques des différentes étapes impliquées dans la formation d'une couche de graphène sur un substrat de cuivre et de son report sur un substrat d'accueil ;
Les figures 7a, 7b, 7c et 7d sont des illustrations des différentes étapes susceptibles d'être mises en œuvre pour la fabrication de l'électrode électrochimique selon un premier exemple de procédé ;
Les Fig. 8a, 8b sont des illustrations d'étape susceptibles d'être également mises en œuvre selon une variante du premier exemple de procédé ;
Les figures 9a, 9b, 9c, 9d, 9e, et 9f sont des illustrations des différentes étapes susceptibles d'être mises en œuvre pour la fabrication de l'électrode électrochimique selon un deuxième exemple de procédé.

### EXPOSÉ DÉTAILLÉ DE MODES DE RÉALISATION PARTICULIERS

Selon la présente invention, il est question de mettre en œuvre des feuillets de graphène. Ces derniers ne sont toutefois pas limités à une seule couche de graphène. En particulier, des feuillets de graphène comprenant jusqu'à quatre, voire dix, couches de graphène pourront être considérés.

Par ailleurs et sans qu'il soit nécessaire de le préciser, un feuillet de graphène comprend deux faces, dites, respectivement, première face et deuxième face, reliées par un bord.

La présente invention concerne une électrode électrochimique formée par un empilement pourvu d'une pluralité de feuillets de graphène et d'une pluralité de couches diélectriques. En particulier, l'empilement est formé par une alternance de feuillets de graphène et de couches diélectriques, et de sorte que chacun des feuillets de graphène soit intercalé entre deux couches diélectriques.

L'empilement ainsi formé comprend deux faces principales essentiellement parallèles, et reliées par un contour.

Les bords des feuillets de graphène sont, au moins en partie, exposés à l'environnement extérieur au niveau d'une section du contour, dite section active, qui forme une zone électrochimiquement sensible de l'électrode électrochimique.

Par « zone électrochimiquement sensible », on entend une zone qui est susceptible d'être le siège de réactions électrochimiques par échange de charges électriques.

L'électrode électrochimique comprend en outre une ou plusieurs électrodes, dites électrodes de contact, contactant électriquement les feuillets de graphène de manière à collecter un signal électrique résultant d'une réaction électrochimique susceptible de se produire au niveau de la section active.

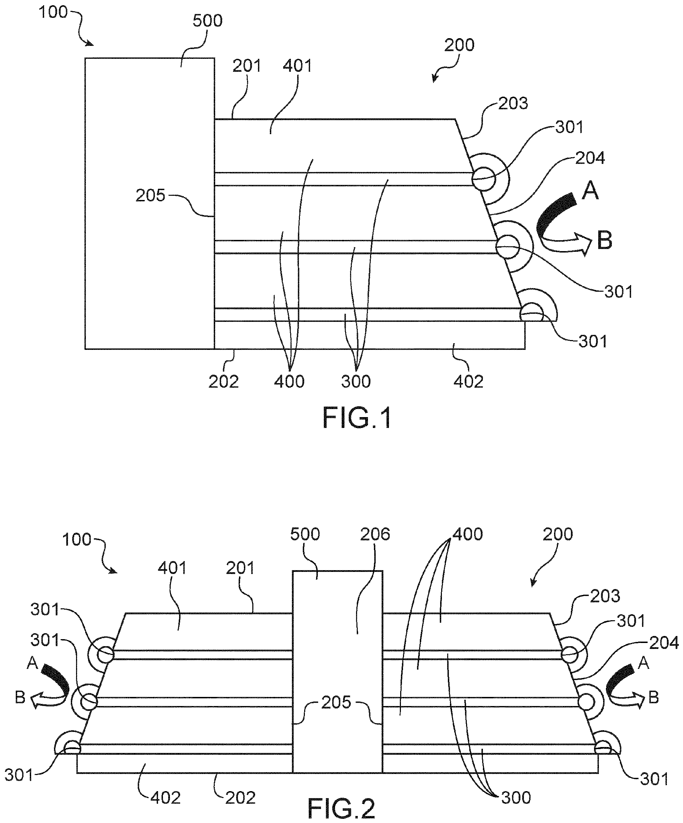

Sur les figures 1 et 2, on peut voir un exemple d'électrode électrochimique 100 selon, respectivement, une première variante et une seconde variante d'un premier mode de réalisation de la présente invention.

L'électrode électrochimique 100 comprend un empilement 200 (ou une membrane) délimité par deux faces principales 201, 202, et un contour 203 reliant lesdites faces principales 201, 202.

L'empilement 200 comprend notamment, d'une de ses faces principales 201 vers l'autre de ses faces principales 202, une alternance de feuillets de graphène 300 et de couches diélectriques 400 et de sorte que chaque couche de graphène 300 soit intercalée entre deux couches diélectriques.

En d'autres termes, l'empilement 200 est terminé au niveau de chacune de ses faces principales 201, 202 par une couche diélectrique 401, 402.

Les couches diélectriques 400 peuvent comprendre au moins un des matériaux choisi parmi : SiO₂, HfO₂, Al₂O₃, Si₃N₄.

Les couches diélectriques 400 peuvent comprendre au moins un des matériaux choisi parmi : Polyméthacrylate de méthyle, Polyéthylène, Polypropylène, Polychlorure de vinyle.

Par ailleurs, le bord 301 des feuillets de graphène 300 est en partie exposé à l'environnement extérieur au niveau d'une section, dite section active 204, du contour, ladite section active 204 formant une zone électrochimiquement sensible de l'électrode électrochimique.

L'électrode électrochimique 100 comprend également une unique électrode, dite électrode de contact 500, contactant électriquement les feuillets de graphène 300. L'électrode de contact 500 est notamment destinée à collecter un signal électrique résultant d'une réaction électrochimique susceptible de se produire au niveau de la section active 204.

Selon la première variante, illustrée à la figure 1, l'électrode de contact 500 est en contact avec les feuillets de graphène 300 au niveau d'une section du contour, dite section de contact 205. Il est entendu, sans qu'il soit nécessaire de le préciser que la section de contact 205 est distincte de la section active 204.

Selon la seconde variante, illustrée à la figure 2, l'empilement 200 comprend une ouverture 206 débouchant au niveau d'au moins une des faces principales, et dans laquelle ladite électrode de contact 500 vient contacter les feuillets de graphène 300.

En fonctionnement, et tel qu'illustré aux figures 1 et 2, l'électrode électrochimique 100 selon la présente invention est plongée dans un milieu liquide, et notamment un milieu aqueux, qui comprend des espèces dans un premier état d'oxydation nommé « A ».

Ces espèces, susceptibles d'échanger des charges avec l'électrode électrochimique 100, diffusent de manière convergente en direction des bords des feuillets de graphène exposés à l'environnement extérieur au niveau de la zone active.

Dès lors qu'elles se trouvent à proximité, et plus particulièrement dans une sphère de diffusion centrée sur le bord concerné, ces dernières échangent une ou plusieurs charges avec le feuillet de graphène et adoptent ainsi un deuxième état d'oxydation nommé « B ».

À cet égard, afin d'éviter un recouvrement entre les sphères de diffusion adjacentes, les couches diélectriques peuvent présenter une épaisseur au moins trois fois supérieure à celle des feuillets de graphène.

L'échange de charges génère alors un courant qui circule le long du plan formé par le feuillet et qui est détecté au niveau de l'électrode de contact 500.

Ce courant détecté est, à cet égard, exempt de perturbations ou de bruit électrochimique susceptibles d'intervenir au niveau des premières et deuxièmes faces des feuillets de graphène. En effet, le masquage de la première face et de la deuxième face par les couches diélectriques prévient toute interaction entre lesdites faces et les espèces en solution de sorte que le courant circulant au sein des feuillets de graphène n'est que peu ou pas affecté.

En d'autres termes, la protection des faces des feuillets de graphène permet de réduire, voire de prévenir, le bruit électrochimique susceptible d'être générer au niveau des premières et deuxièmes faces, et par voie de conséquence améliorer le rapport signal sur bruit.

Par ailleurs, les bords des feuillets de graphène exposés au niveau de la section active 204, très réactifs du fait de leur nature défectueuse, confèrent à l'électrode électrochimique 100 une sensibilité améliorée au regard des électrodes connues de l'état de la technique.

Enfin, les bords des feuillets, qui se comportent comme des micro électrodes, favorisent une diffusion convergente. Cette diffusion convergente des espèces en solution bien plus rapide qu'un phénomène de diffusion planaire susceptible d'être observé au niveau du plan d'un feuillet de graphène est un autre facteur d'amélioration de la sensibilité de l'électrode électrochimique.

Selon un aspect particulièrement avantageux, la mise en œuvre d'une pluralité de feuillets de graphène (par exemple au moins deux feuillets, de manière avantageuse 3 feuillets) permet d'augmenter la longueur cumulée des bords exposées à l'environnement extérieur au niveau de la section active 204, et par voie de conséquence améliorer la sensibilité de l'électrode électrochimique 100.

De manière avantageuse, l'électrode de contact peut être en contact avec chacun de feuillets de graphène à proximité de la section active 204.

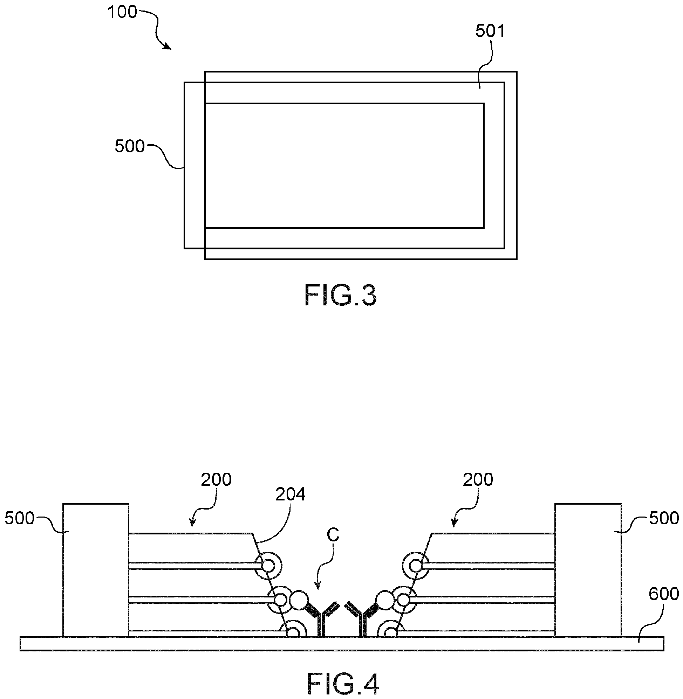

À cet égard, l'électrode de contact, tel qu'illustrée à la figure 3 peut comprendre une bande de contact 501 qui s'étend selon une interface formée entre le feuillet à contacter et l'une ou l'autre des couches diélectriques entre lesquelles ledit feuillet est intercalé. En particulier, la bande de contact 501 peut être à une distance relativement faible, par exemple comprise entre 0,1 µm et 100 µm, du bord 301 du feuillet de graphène qu'elle contacte de manière à réduire la résistance électrique entre le bord et ladite électrode.

Selon un autre aspect particulièrement avantageux, le bord des feuillets de graphène en partie exposé à l'environnement extérieur au niveau de la section active 204 peuvent être soit hydrogénés soit oxydés. Il est ainsi possible de moduler la réactivité électrochimique des bords exposés au niveau de la section active 204 en fonctionnalisant ces derniers.

Selon encore un autre aspect, chaque feuillet de graphène peut comprendre une pluralité de monocouches de graphène entre lesquelles des ions Li ou Na sont insérés au niveau du bord exposé à l'environnement extérieur.

Ce type d'insertion permet de conférer au graphène des propriétés réductrices.

Les bords des feuillets de graphène exposés à l'environnement extérieur peuvent être en affleurement avec le contour au niveau de la section active.

De manière alternative, ces mêmes bords peuvent être en projection par rapport au contour au niveau de la section active de manière à exposer à l'environnement extérieur une section des faces des feuillets, dite section exposée, qui s'étend à partir de leur bord selon une distance prédéterminée, avantageusement la distance prédéterminée est comprise entre 1 nm et 100 nm. Ainsi, et de manière avantageuse, la section exposée peut être fonctionnalisée par des espèces chimiques et/ou biologiques.

De manière particulièrement avantageuse, tel qu'illustré à la figure 4, l'empilement 200 repose, par une de ces faces principales 202, sur un support 600 sur lequel des espèces biologiques « C » sont susceptibles de se greffer et interagir avec les bords des feuillets de graphène au niveau de la section active 204. Il est ainsi possible de sonder l'activité biologique des espèces « C ».

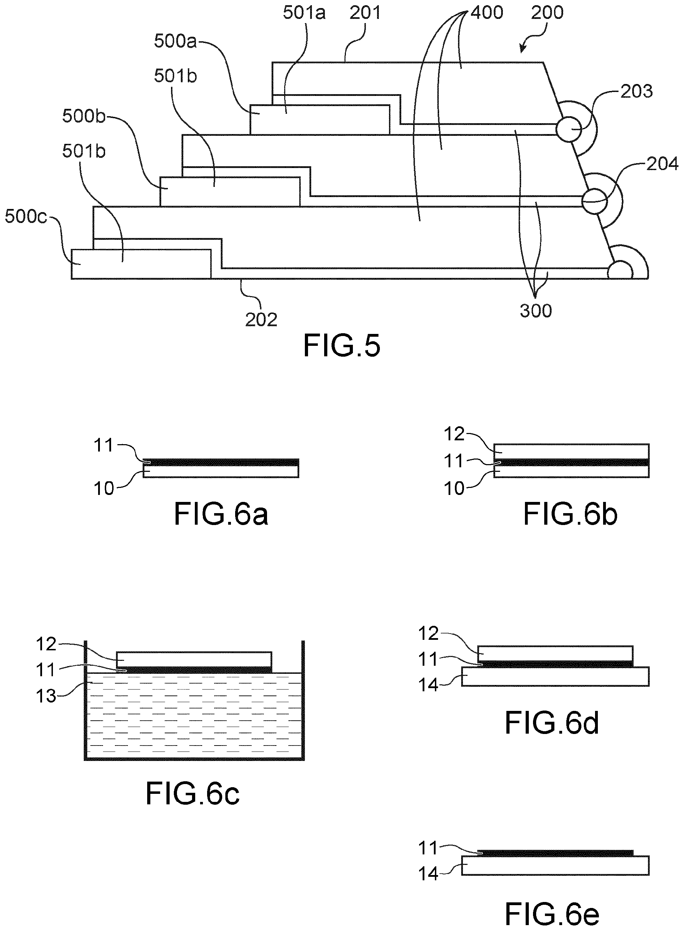

La figure 5 est une illustration d'un deuxième mode de réalisation de la présente invention qui diffère du premier mode en ce que l'électrode électrochimique 100 comprend une pluralité d'électrodes de contact 500a, 500b, et 500c contactant chacune un feuillet de graphène différent.

Ce deuxième mode de réalisation reprend pour l'essentiel tous les éléments et caractéristiques présentés dans le cadre du premier mode de réalisation.

Les électrodes de contact 500a, 500b, et 500c peuvent notamment comprendre des bandes de contact 501a, 501b et 501c s'étendent chacune selon une interface formée entre le feuillet à contacter et l'une ou l'autre des couches diélectriques entre lesquelles ledit feuillet est intercalé.

Cette configuration permet de sonder indépendamment, et de manière locale les processus électrochimiques se déroulant sur les bords exposés au niveau de la section active 204 de chaque feuillet de graphène.

La présente invention concerne également un procédé de fabrication de l'électrode électrochimique 100.

En particulier, le procédé fait appel à une étape de formation et de report d'un feuillet de graphène sur un substrat d'accueil 14 illustré aux figures 6a à 6e.

À cet égard, l'homme du métier trouvera dans le document [2] cité à la fin de la description toutes les informations nécessaires à la formation de feuillets de graphène 11 par CVD sur un substrat de cuivre 10 (figure 6a).

Une couche de polymère 12 peut ensuite être formée au moyen d'une tournette sur le feuillet de graphène (figure 6b). La couche de polymère peut comprendre du poly(methylméthacrylate) (PMMA), ou du polydimethylsiloxane (PDMS), ou du polycarbonate (PC).

L'invention ne doit toutefois pas être limitée à la mise en œuvre d'une couche de polymère et il peut être envisagé de mettre en œuvre des matériaux d'une autre nature. À titre d'exemple, la couche 12 peut comprendre un diélectrique minéral, un métal (par exemple de l'or).

La formation de la couche de polymère est suivie d'une étape de retrait, par exemple par gravure dans un bain de gravure liquide 13, du substrat de cuivre 10 (figure 6c) de sorte que la couche de graphène 11 n'est plus maintenue que par la couche de polymère 12.

Enfin, le feuillet de graphène 11 peut être reporté sur un substrat d'accueil, par exemple fait de matériau diélectrique (figures 6d et 6e). Ce report comprend notamment l'assemblage de l'empilement formé par la couche de graphène 11 et la couche de polymère 12 avec un substrat d'accueil 14 (figure 6d).

La couche de polymère 12 peut ensuite être retirée par gravure, par exemple par gravure sèche ou liquide (figure 6e).

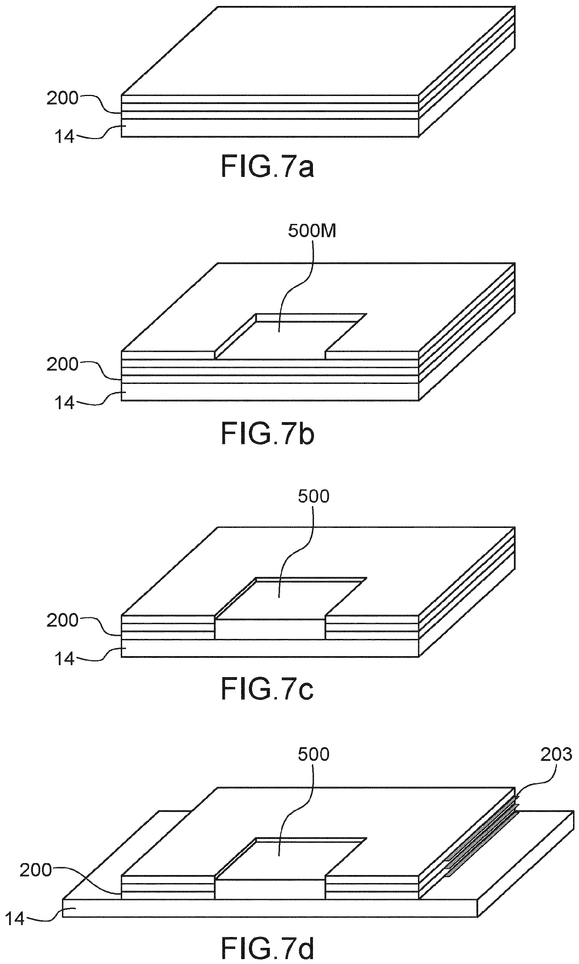

Les étapes ainsi décrites sont largement mises en œuvre dans le cadre d'un premier exemple de procédé de fabrication de l'électrode électrochimique 100 pourvu d'une unique électrode de contact (illustré aux figures 7a à 7d).

Le procédé comprend notamment une étape a) de formation d'un empilement 200 qui comprend une alternance de couches de graphène 11 et de couches diélectriques 15 sur le substrat d'accueil 14.

Cette étape a) comprend l'exécution du cycle d'étapes suivant :
a1) formation et report d'une couche de graphène
a2) formation d'une couche diélectrique en recouvrement de la couche de graphène.

Les étapes a1) et a2) sont répétées autant de fois que nécessaire pour former l'empilement 200 selon les termes de la présente invention (figure 7a).

L'étape a) est suivie d'une étape b) (illustrée aux figures 7b et 7c) de définition d'un motif 500M d'électrode de contact.

L'étape b) comprend notamment les étapes suivantes :
b1) une étape de photolithographie destinée à définir le motif d'électrode de contact, cette étape comprenant notamment la formation d'une couche de résine et son exposition à un rayonnement à travers un masque photo lithographique (figure 7b) ;
b2) une étape de gravure de l'empilement 200 à travers le motif 500M (figure 7c).

L'électrode de contact 500 est ensuite formée au cours d'une étape c) par dépôt métallique destiné à combler le volume de l'empilement gravé. L'étape c) comprend également un retrait du masque de résine et de la couche métallique qui le recouvre par gravure liquide.

Le procédé comprend enfin une étape d) de définition du contour 203 de l'empilement 200 (figure 7d) exécutée notamment par gravure.

Cette gravure finale permet notamment de découvrir les bords de feuillets de graphène au niveau de la surface active.

Selon une variante de ce premier exemple, il peut être considéré de passiver l'électrode de contact au cours d'une étape c1) de passivation de l'électrode de contact exécutée avant l'étape d).

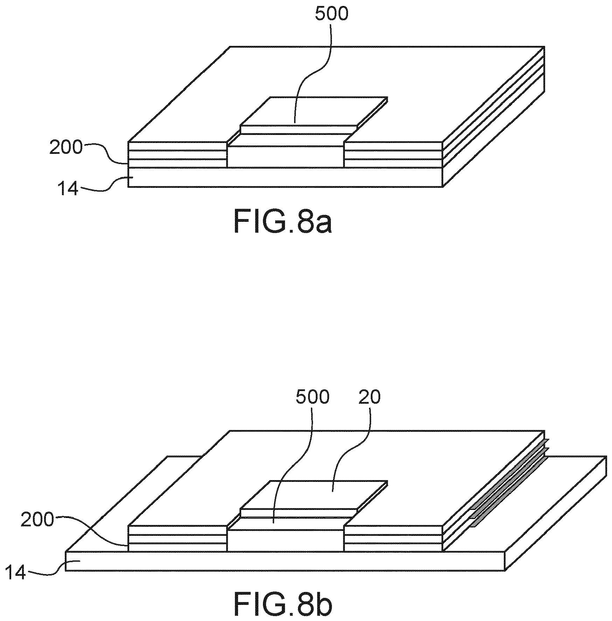

En particulier, tel qu'illustré à la figure 8a, une passivation de l'électrode qui comprend la formation d'une couche de passivation 20 en recouvrement de l'électrode, et permet ainsi de protéger cette dernière lors de l'exécution de l'étape d) de définition du contour 203 (figure 8b).

L'invention concerne également un deuxième exemple de procédé de fabrication de l'électrode électrochimique 100. Ce deuxième exemple est notamment mis en œuvre pour la fabrication d'une électrode électrochimique pourvue d'une pluralité d'électrodes de contact 500a, 500b, 500c contactant individuellement chacun des feuillets de graphène.

Ce deuxième exemple de procédé reprend pour l'essentiel les étapes décrites dans le cadre du premier exemple.

Toutefois, les électrodes de contact 500a, 500b, 500c sont formées, dans le cadre de ce deuxième exemple, en même temps que l'empilement 200.

Le procédé comprend notamment une étape a) de formation d'un empilement 200 qui comprend une alternance de couches de graphène 11 et de couches diélectriques 15 sur le substrat d'accueil 14 et des électrodes de contact 500a, 500b, 500c.

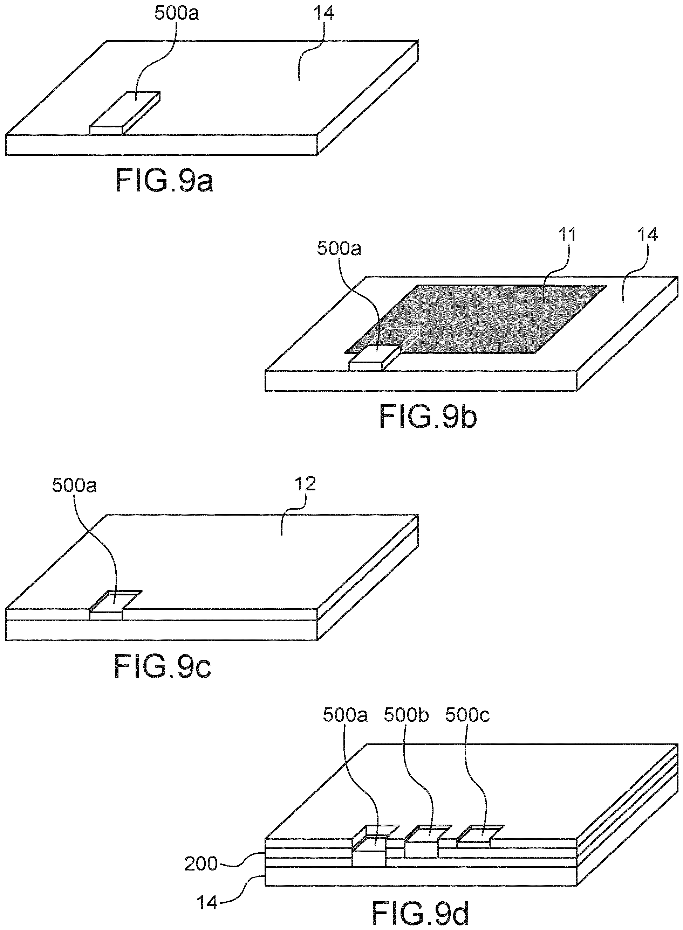

Cette étape a) comprend l'exécution du cycle d'étapes suivant :
a0) formation d'une électrode de contact 500a, 500b, 500c sur le substrat d'accueil 14 (figure 9a)
a1) formation et report d'une couche de graphène 11 et en recouvrement partiel de l'électrode de contact (figure 9b),
a2) formation d'une couche diélectrique 12 en recouvrement de la couche de graphène (figure 9c),
a3) formation d'une ouverture dans la couche de diélectrique de manière à exposer à l'environnement extérieur une section de l'électrode de contact non recouverte par la couche de graphène (figure 9c).

Les étapes a0) à a3) sont répétées autant de fois que nécessaire pour former l'empilement 200 et les électrodes de contact 500a, 500b, 500c.

L'étape a3) est toutefois exécutée de manière à exposer également à l'environnement extérieur les sections des électrodes de contact découvertes lors des cycles précédents.

Ainsi, à l'issue de l'exécution d'une pluralité de cycles, un empilement 200 pourvu d'une alternance de couches de graphène et de couches diélectriques est obtenu. L'empilement comprend en outre les électrodes de contact 500a, 500b, et 500c contactant individuellement chacune des couches de graphène (figure 9d).

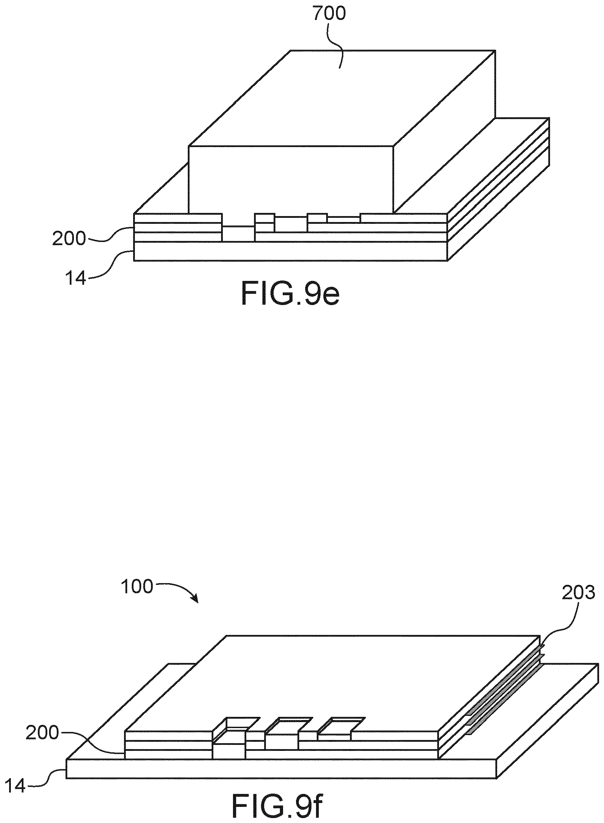

Le procédé comprend enfin une étape c) de définition du contour 203 de l'empilement 200 (figures 9e et 9f) exécuté notamment par gravure.

L'étape c) comprend notamment les étapes suivantes :
c1) une étape de formation d'un masque 700 définissant le motif final de l'empilement 200 (figure 9e)
c2) une étape de gravure de manière à former le contour 203 de l'empilement 200 (figure 9f).

### RÉRÉRENCES

[1] Yuan et al., « The edge- and basal-plane-specific electrochemistry of a single-layer graphene sheet », Scientific Reports, 3(1), (2013).
[2] Liu. O et. Al., "Emerging trends in 2D nanotechnology that are redefining our understanding of "Nanocomposites"", Nano Today, 21, pp. 18-40, (2018).

## Revendications

1. Electrode électrochimique (100) qui comprend :
- un empilement (200) délimité par deux faces principales (201, 202) et un contour (203) reliant lesdites faces, l'empilement comprenant, entre ses faces principales, une alternance de feuillets de graphène (300) et de couches diélectriques (400) et de sorte que chaque feuillet de graphène soit intercalé entre deux couches diélectriques, le bord (301) des feuillets de graphène étant en partie exposé à l'environnement extérieur au niveau d'une section, dite section active (204), du contour (201), ladite section active (204) formant une zone électro-chimiquement sensible de l'électrode électrochimique, les bords des feuillets de graphène exposés à l'environnement extérieur sont en affleurement avec le contour au niveau de la section active (203),
- une ou plusieurs électrodes, dites électrodes de contact (500, 500a, 500b, 500c), contactant électriquement les feuillets de graphène (300), et destinées à collecter un signal électrique résultant d'une réaction électrochimique susceptible de se produire au niveau de la section active (204).

2. Electrode électrochimique selon la revendication 1, dans laquelle les couches diélectriques (400) présentent une épaisseur au moins trois fois supérieure à celle des feuillets de graphène (300).

3. Electrode électrochimique selon la revendication 1 ou 2, dans laquelle l'une ou plusieurs électrodes de contact (500, 500a, 500b, 500c) sont au contact des feuillets de graphène au niveau d'une section du contour, dite section de contact (205).

4. Electrode électrochimique selon la revendication 1 ou 2, dans laquelle l'empilement comprend une ou plusieurs ouvertures (206) débouchant au niveau d'au moins une des faces principale (201, 202), et dans lesquelles l'une ou plusieurs électrodes de contact (500, 500a, 500b, 500c) viennent contacter les feuillets de graphène (300).

5. Electrode électrochimique selon la revendication 3 ou 4, dans laquelle l'une ou plusieurs électrodes de contact (500) comprend une unique électrode de contact contactant l'ensemble de feuillets de graphène (300).

6. Electrode électrochimique selon l'une des revendications 1 à 5, dans laquelle le bord (301) des feuillets de graphène (300) qui sont en partie exposés à l'environnement extérieur au niveau de la section active (203) sont hydrogénés ou oxydés.

7. Electrode électrochimique selon l'une des revendications 1 à 6, dans laquelle chaque feuillet de graphène (300) comprend une pluralité de monocouches de graphène entre lesquelles des ions Li ou Na sont insérés au niveau du bord exposé à l'environnement extérieur.

8. Electrode électrochimique selon l'une des revendications 1 à 7, dans laquelle l'empilement repose, par une de ces faces principales, sur un support sur lequel des espèces biologiques sont susceptibles de se greffer et interagir avec les bords des feuillets de graphène au niveau de la section active.

9. Electrode électrochimique selon l'une des revendications 1 à 8, dans laquelle les couches diélectriques comprennent au moins un des matériaux choisi parmi : SiO₂, HfO₂, Al₂O₃, Si₃N₄.

10. Electrode électrochimique selon l'une des revendications 1 à 8, dans laquelle les couches diélectriques comprennent au moins un des matériaux choisi parmi : Polyméthacrylate de méthyle, Polyéthylène, Polypropylène, Polychlorure de vinyle.
